# EUROPÄISCHE PATENTSCHRIFT

(11) **EP 0 849 027 B1**
(45) Veröffentlichungstag und Bekanntmachung des Hinweises auf die Patenterteilung: **02.05.2003**
(21) Anmeldenummer: 97120921.8
(22) Anmeldetag: 28.11.1997
(51) Int. Cl.: B23K 20/04

(54) **Verfahren zum Herstellen von Profilbändern und Profilblechen**
Method for manufacturing profiled strips and sheets
Méthode de fabrication de plaques et bandes profilées

(30) Priorität: 18.12.1996 DE 19652744
(43) Veröffentlichungstag der Anmeldung: 24.06.1998
(73) Patentinhaber: Honsel Walzprodukte GmbH, 59872 Meschede (DE)
(72) Erfinder: Lotz, Werner, 59872 Meschede (DE)
(74) Vertreter: Rehders, Jochen

(56) Entgegenhaltungen:
- EP-A- 0 236 245
- GB-A- 2 017 541
- PATENT ABSTRACTS OF JAPAN vol. 007, no. 031 (M-192), 8.Februar 1983 -& JP 57 187190 A (HITACHI DENSEN KK), 17.November 1982,
- PATENT ABSTRACTS OF JAPAN vol. 006, no. 193 (M-160), 2.Oktober 1982 -& JP 57 100887 A (DAIDO STEEL CO LTD), 23.Juni 1982,
- PATENT ABSTRACTS OF JAPAN vol. 013, no. 229 (M-831), 26.Mai 1989 -& JP 01 044287 A (NIPPON STEEL CORP), 16.Februar 1989,

## Beschreibung

Die Erfindung betrifft ein Verfahren zum Herstellen von Profilbändern und Profilblechen mit unterschiedlichen Dicken über die Breite und nach dem Verfahren hergestellte Profilbänder und Profilbleche.

Durch Strangpressen hergestellte Profile, insbesondere geschlossene Hohlprofile lassen sich mit unterschiedlichen Wandstärken pressen, jedoch ist eine Mindestwandstärke in den dünnsten Bereichen von mindestens 1,2 mm erforderlich. Profile mit dünneren Wandstärken lassen sich nur aus dünneren Blechen durch Abkanten oder Rollformen herstellen, weisen dann jedoch überall die gleiche Wandstärke auf, die der größten erforderlichen Wandstärke entspricht.

Für Leichtbauprofile ist die größte Wandstärke aus Festigkeitsgründen oft nur in bestimmten Bereichen erforderlich, während in anderen Bereichen geringere Wandstärken zulässig sind.

Derartige Leichtbauprofile werden insbesondere in der Kraftfahrzeugtechnik gewünscht, um am Fahrzeug möglichst viel an Gewicht einzusparen.

Durch Kaltwalzen lassen sich Bänder oder Bleche, insbesondere aus Aluminium oder Aluminiumlegierungen nicht mit unterschiedlicher Dicke herstellen, da die dünneren Bereiche einen erheblich größeren Verformungsgrad erleiden als die dickeren Bereiche und daher in der Länge erheblich mehr gestreckt werden als die dickeren Bereiche. Dies führt dazu, daß sich vor dem Walzenkaliber im dünneren Bereich ein Materialrückstau mit daraus folgender Wellenbildung und schließlich Zerreißen des durch das Walzgerüst geführten Bandes oder Bleches ergibt.

In Patent Abstracts of Japan Vol. 007, no. 031 (M-192), 08. Februar 1983 - d JP 57 187 190 A (Hitachi Densen K.K), 17. November 1982, ist ein Verfahren zum Herstellen von Profilbändern und Profilblechen mit unterschiedlichen Dicken über die Breite beschrieben, bei dem mindestens zwei Bänder oder Bleche vollflächig durch Walzplattieren mittels Walzkaliber in Walzrichtung symmetrisch zur Längsmittellinie miteinander verbunden werden. Welche Verformung die Bänder oder Bleche dabei erleiden sollen, ist nicht angegeben.

Der Erfindung liegt das Problem zugrunde, ein Verfahren zum Herstellen von Profilbändern und Profilblechen mit unterschiedlichen Dicken über die Breite zu schaffen, das sich walztechnisch beherrschen läßt und Profilbänder und Profilbleche hoher Qualität liefert, die zum Herstellen von Blechprofilen durch Abkanten oder Rollformen geeignet sind.

Ausgehend von dieser Problemstellung wird ein Verfahren zum Herstellen von Profilbändern und Profilblechen mit unterschiedlichen Dicken über die Breite vorgeschlagen, bei dem mindestens zwei Bänder oder Bleche unterschiedlicher Breite vollflächig durch Walzplattieren mittels Walzenkaliber in Walzrichtung symmetrisch zur Längsmittellinie miteinander verbunden werden, wobei erfindungsgemäß die mindestens zwei Bänder oder Bleche durch das Walzplattieren in einem Stich auf das vorgegebene Dickenmaß gewalzt werden, der durch die Walzenkaliber bewirkte Verformungsgrad 60 % beträgt und für die mindestens zwei Bänder oder Bleche über deren gesamte Breite gleich ist.

Das Walzplattieren ist zum Aufbringen von metallischen Überzügen bekannt. Durch das Walzplattieren lassen sich die unterschiedlichsten Metalle nach geeigneter Vorbehandlung miteinander verbinden. Das bekannte Plattierverfahren dient jedoch nur dazu, dicke und dichte Überzüge auf das Grundmetall aufzubringen, die z. B. als Korrosionsschutz oder Schutz vor chemischen Angriffen im chemischen Apparatebau oder als Glänzwerkstoff, z. B. in der Beleuchtungsindustrie, bestimmt sind. Im Gegensatz dazu wird das Walzplattierverfahren erfindungsgemäß dazu benutzt, zwei Bänder oder Bleche vorgegebener, unterschiedlicher Breite miteinander zu verbinden, um auf diese Weise Profilbänder und Profilbleche mit abgestufter Dicke für die Weiterverarbeitung zu Blechprofilen zu erhalten.

Überraschenderweise hat sich bei Versuchen ergeben, daß zwar beim Walzplattieren durch das Verformen ebenfalls ein unterschiedlicher Rückstau vor den jeweiligen Walzenkalibern eintritt, daß dieser Rückstau jedoch durch die unterschiedliche Einziehgeschwindigkeit der Bänder oder Bleche ausgeglichen wird und daher keine Wellenbildung oder kein Einreißen vor den Walzenkalibern auftritt.

Damit die durch Walzplattieren verbundenen Bänder oder Bleche völlig gerade aus dem Walzkaliber austreten, ist es vorteilhaft, wenn die mindestens zwei Bänder oder Bleche in Walzrichtung symmetrisch zur Längsmittellinie mit unterschiedlichen Dicken miteinander verbunden werden, d. h. daß entweder das schmalere Band mittig auf das breitere Band aufgewalzt wird, oder daß zwei oder mehr schmalere Bänder beabstandet und symmetrisch zur Längsmittellinie mit den Außenkanten des breiteren Bandes fluchtend aufgewalzt werden.

Wenn ein Profilband oder Profilblech mit nur einem Dickenabsatz verlangt wird, können die durch Walzplattieren miteinander verbundenen Bänder oder Bleche nach dem Walzplattieren entlang der Längsmittellinie geteilt werden. Selbstverständlich können auch mehrere Profilbänder oder Profilbleche durch mehrfaches Längsteilen hergestellt werden.

Da die mindestens zwei Bänder oder Bleche durch das Walzplattieren in einem Stich auf das vorgegebene Dickenmaß gewalzt werden, der durch das Walzplattieren bewirkte Verformungsgrad für die mindestens zwei Bänder oder Bleche gleich ist und das Walzplattieren mit einem Verformungsgrad von 60 % erfolgt, wird dementsprechend der dünnere Bereich, wenn er ursprünglich eine Dicke von 3 mm aufweist, auf 1,2 mm verformt, während der aus zwei übereinander liegenden Bändern oder Blechen bestehnde dickere Bereich, der eine Ausgangsdicke von 5 mm hat, auf 2 mm verformt werden muß.

Bei Verwendung von Bändern oder Blechen aus Aluminium oder Aluminiumlegierungen können die einander zugekehrten Oberflächen unmittelbar vor dem Walzplattieren von ihrer Oxidschicht befreit werden und lassen sich dann homogen miteinander verbinden, da die so aktivierten Oberflächen aus Aluminium oder Aluminiumlegierung eine große Affinität zueinander haben.

Da sich im Walzenkaliber beim Walzplattieren zwischen den Bändern lineare Verschiebungen in Walzrichtung ergeben, wird hierdurch eine Verbindung bewirkt, die einer mittels Reibschweißen ,durchgeführten Verbindung gleichkommt.

Die durch Walzplattieren miteinander zu verbindenden Bänder oder Bleche können gleiche oder unterschiedliche Ausgangs- und Enddicken aufweisen, mit dem Ergebnis, daß sich Profilbänder und Profilbleche herstellen lassen, die aus durch Walzplattieren verbundene Bänder oder Bleche unterschiedlicher Breite und unterschiedlicher Dicke über die Breite bestehen. Besonders bevorzugt sind Profilbänder oder Profilbleche, die aus zwei Bändern oder Blechen unterschiedlicher Breite und einer Dicke von 3 mm und 2 mm so durch Walzplattieren miteinander verbunden sind, daß nach dem Walzplattieren der dünnere Bereich eine Dicke von 1,2 mm und der dickere Bereich eine Dicke von 2,0 mm aufweisen.

Diese Profilbänder oder Profilbleche lassen sich zur Herstellung von Blechprofilen als Leichtbauprofile für den Fahrzeugbau einsetzen, wenn hierzu beispielsweise eine kaltaushärtende Aluminiumlegierung, wie z. B. AlMgSi1F21 für beide Schichten verwendet wird. Nach dem Walzplattieren werden die Profilbänder oder Profilbleche lösungsgeglüht, abgeschreckt und gereckt und lassen sich anschließend durch Abkanten oder Rollformen zu Blechprofilen mit unterschiedlichen Materialstärken in unterschiedlichen Bereichen umformen.

Die Erfindung wird nachstehend anhand mehrerer in der Zeichnung dargestellter Ausführungsbeispiele des näheren erläutert. In der Zeichnung zeigen:
- Fig. 1: eine Querschnittsdarstellung von einem breiten und zwei darauf gelegten schmalen Bändern vor dem Walzplattieren,
- Fig. 2: das Profilband oder Profilblech gemäß Fig. 1 nach dem Walzplattieren,
- Fig. 3: eine andere Ausführungsform von zwei aufeinander gelegten Bändern vor dem Walzplattieren und
- Fig. 4: einen Querschnitt durch ein Profilband nach dem Walzplattieren.

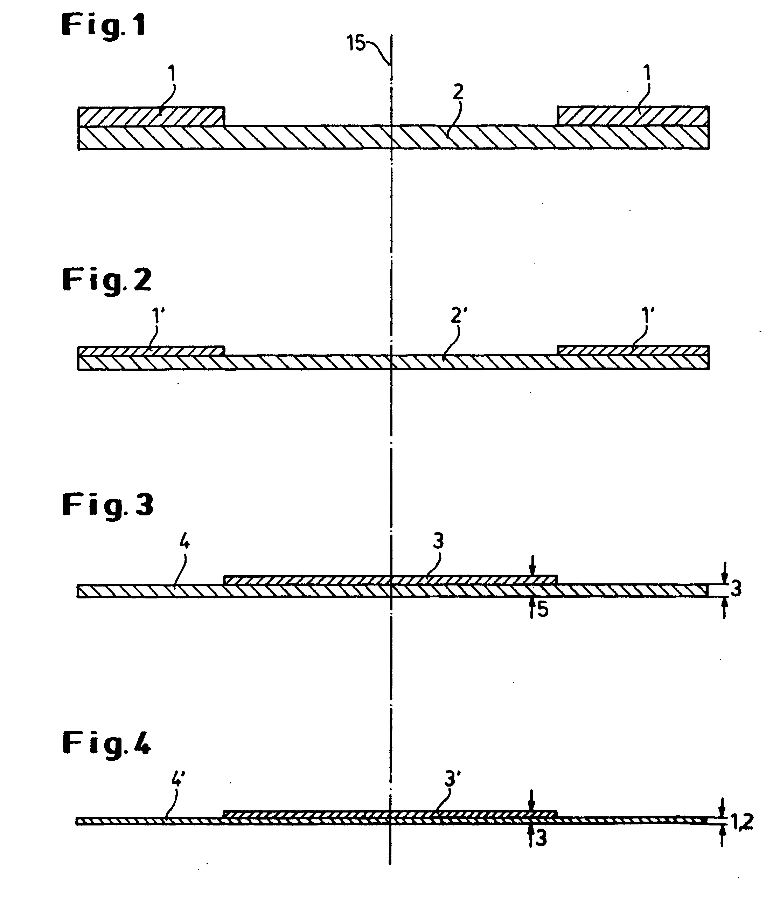

Fig. 1 zeigt zwei schmale Bänder 1 auf einem breiten Band 2, wobei die Außenkanten der schmalen Bänder 1 mit den Außenkanten des breiten Bandes 2 fluchten und die schmalen Bänder 1 symmetrisch zu einer Längsmittellinie 15 angeordnet sind. Die schmalen Bänder 1 sind etwas dünner als das breite Band 2.

Fig. 2 zeigt den Zustand nach dem Walzplattieren, durch das die Bänder einen Verformungsgrad von etwa 60 % erleiden, der zu einer materialeinheitlichen Verbindung zwischen den dickenreduzierten schmalen Bändern 1' und dem dickenreduzierten Breitenband 2' führt.

Die einander zugekehrten Oberflächen der Bänder 1, 2 werden unmittelbar vor dem Walzplattieren z. B. durch Bürsten oder Beizen aufgerauht und von ihrer Oxidschicht befreit, so daß das Walzplattieren durch das starke Verformen eine innige Verbindung in der gewünschten Schichtdicke bewirkt.

Fig. 3 und 4 zeigen ein Profilband aus einem symmetrisch zur Längsmittellinie 15 angeordneten schmaleren Band 3 und einem breiteren Band 4, wovon das schmalere Band 3 ursprünglich eine Dicke von 2 mm und das breitere Band 4 eine Dicke von 3 mm vor dem Walzplattieren aufweisen. Durch das Walzplattieren wird die Gesamtdicke in einem Stich auf 2 mm und die Dicke des breiteren Bandes 4' auf 1,2 mm reduziert, ohne daß sich dabei die Breiten der Bereiche 3' und 4' ändern.

Wenn das Profilband 3', 4' gemäß Fig. 4 entlang der Längsmittellinie 15 geteilt wird, ergeben sich zwei Profilbänder in abgestufter Dicke.

Vorzugsweise wird für die Bänder 1, 2 bzw. 3, 4 eine kaltaushärtende Aluminiumlegierung, wie z. B. AlMgSi1F21 verwendet, die sich im lösungsgeglühten Zustand mit einem Verformungsgrad von 60 % aneinander walzplattieren lassen und dabei eine mit dem Reibschweißen vergleichbare intermetallische Verbindung bilden.

Das Walzplattieren kann, wie im dargestellten Beispiel beschrieben, mit gleichen Legierungen durchgeführt werden, jedoch ist es auch möglich, unterschiedliche Legierungen oder sogar unterschiedliche Werkstoffe, z. B. Kupfer und Aluminium, zu verbinden, wenn dies für Blechprofile aus Profilbändern oder Profilblechen mit unterschiedlichen Dicken über die Breite gefordert wird.

## Patentansprüche

1. Verfahren zum Herstellen von Profilbändern und Profilblechen (1', 2'; 3', 4') mit unterschiedlichen Dicken über die Breite, bei dem mindestens zwei Bänder oder Bleche (1, 2; 3, 4) unterschiedlicher Breite vollflächig durch Walzplattieren mittels Walzenkaliber in Walzrichtung symmetrisch zur Längsmittellinie (15) miteinander verbunden werden, wobei die mindestens zwei Bänder oder Bleche durch das Walzplattieren in einem Stich auf das vorgegebene Dickenmaß gewalzt werden, **dadurch gekennzeichnet, daß** der durch die Walzenkaliber bewirkte Verformungsgrad 60 % beträgt und für die mindestens zwei Bänder oder Bleche über deren gesamte Breite gleich ist.

2. Verfahren nach Anspruch 1, **dadurch gekennzeichnet, daß** die mindestens zwei Bänder oder Bleche nach dem Walzplattieren in Längsrichtung in zwei oder mehr Profilbänder oder Profilbleche geteilt werden.

3. Verfahren nach Anspruch 1 oder 2, **dadurch gekennzeichnet, daß** bei Verwendung von Bändern oder Blechen aus Aluminium oder einer Aluminiumlegierung die einander zugekehrten Oberflächen durch Bürsten oder Beizen von ihrer Oxidschicht unmittelbar vor dem Walzplattieren befreit werden.

4. Verfahren nach einem oder mehreren der Ansprüche 1 bis 3, **dadurch gekennzeichnet, daß** die durch Walzplattieren miteinander zu verbindenden Bänder unterschiedliche Ausgangs- und Enddicken aufweisen.

## Claims

1. A method for the production of profiled strips and profiled sheets (1', 2'; 3', 4') of different thicknesses across their width, in which at least two strips or sheets (1, 2; 3, 4) of different width are joined together over their entire surface by roll bonding cladding by means of roll passes in the direction of rolling symmetrically to the longitudinal centre line (15), wherein the at least two strips or sheets are rolled to the predetermined thickness by the roll bonding cladding in one pass of the roll, **characterised in that** the degree of deformation effected by the roll pass is 60% and is the same for the at least two strips or sheets over the entire width thereof.

2. A method according to Claim 1, **characterised in that** the at least two strips or sheets after the roll bonding cladding in the longitudinal direction are divided into two or more profiled strips or profiled sheets.

3. A method according to Claim 1 or 2, **characterised in that** when using strips or sheets made of aluminium or an aluminium alloy the facing surfaces are freed of their oxide layer by brushing or pickling immediately before the roll bonding cladding.

4. A method according to one or more of Claims 1 to 3, **characterised in that** the strips to be joined together by roll bonding cladding have different starting and end thicknesses.

## Revendications

1. Procédé de fabrication de bandes profilées et de tôles profilées (1', 2' ; 3', 4') présentant des épaisseurs différentes sur leur largeur, dans lequel deux bandes ou tôles (1, 2 ; 3, 4) de largeur différente sont reliées entre elles sur toute leur surface par placage par laminage au moyen de calibres de cylindre dans le sens du laminage, symétriquement à la ligne médiane longitudinale (15), les bandes ou tôles, au moins au nombre de deux, étant laminées par placage par laminage, en une passe, à la cote d'épaisseur prédéfinie, **caractérisé en ce que** le degré de déformation, provoqué par les calibres des cylindres est de 60 % et est le même sur toute la largeur pour les bandes ou tôles, au moins au nombre de deux.

2. Procédé selon la revendication 1, **caractérisé en ce que** les bandes ou tôles, au moins au nombre de deux, sont divisées, après le placage par laminage, dans le sens de la longueur, en deux bandes profilées ou tôles profilées ou plus.

3. Procédé selon la revendication 1 ou 2, **caractérisé en ce que** dans le cas de l'utilisation de bandes ou tôles en aluminium ou en un alliage d'aluminium, les surfaces tournées l'une vers l'autre sont libérées de leur couche d'oxyde, par brossage ou décapage, immédiatement avant leur placage par laminage.

4. Procédé selon une ou plusieurs des revendications 1 à 3, **caractérisé en ce que** les bandes à relier entre elles par placage par laminage présentent des épaisseurs initiales et finales différentes.
